# FASCICULE DE BREVET EUROPEEN

(11) **EP 1 846 307 B1**
(45) Date de publication et mention de la délivrance du brevet: **28.04.2010**
(21) Numéro de dépôt: 06709211.4
(22) Date de dépôt: 01.02.2006
(51) Int. Cl.: B65D 77/04, B65D 21/02, B65D 77/24

(54) **DISPOSITIF DESTINE A RECEVOIR DES ALIMENTS, PROCEDE DE FABRICATION ET UTILISATION**
VORRICHTUNG ZUR AUFNAHME VON NAHRUNGSMITTELN, VERFAHREN ZUR HERSTELLUNG DAVON UND VERWENDUNG DAVON
DEVICE FOR RECEIVING FOOD, PRODUCTION METHOD THEREOF AND USE OF SAME

(30) Priorité: 01.02.2005 FR 0500988
(43) Date de publication de la demande: 24.10.2007
(73) Titulaire: Durouge, Henri, Résidence Empereur Hadrien, Rue Bernard Noël 84110 Vaison la Romaine (FR)
(72) Inventeur: Durouge, Henri, Résidence Empereur Hadrien, Rue Bernard Noël 84110 Vaison la Romaine (FR)
(74) Mandataire: Roger, Walter
(86) Numéro de dépôt international: PCT/FR2006/000218
(87) Numéro de publication internationale: WO 2006/082308

(56) Documents cités:
- EP-A- 0 513 606
- FR-A- 2 682 864
- FR-A- 2 760 226
- US-A- 3 608 770
- US-A- 3 785 544
- US-A- 4 966 296
- US-A- 5 614 235

## Description

L'invention concerne un ensemble destiné à recevoir des aliments, comportant deux parties d'épaisseurs différentes, solidaires pendant leur usage effectif, de formes semblables et emboîtables.

Un tel ensemble conforme au préambule de la revendication 1 est décrit par le document EP-A- 0 513 606.

La première partie primordiale dénommée coiffe reçoit les aliments et les accessoires éventuels nécessaires à leur consommation. Elle est réalisée en un matériau de faible épaisseur, mais suffisamment résistant, sous forme de film résistant par exemple pour l'utilisation prévue. Cette coiffe amovible est jetable, donc non réutilisable après usage. Une nouvelle coiffe est mise en place sur le socle à chaque utilisation.

La seconde partie qui constitue le socle sur lequel vient s'adapter la coiffe est fabriquée dans une matière dont l'épaisseur doit assurer la résistance et la rigidité de l'ensemble. Ce support est récupérable, donc réutilisable. Sa matière est garantie alimentaire également.

Actuellement, dans des dispositifs similaires, les aliments cuisinés sont déposés dans une partie de faible résistance, manquant d'assise, de stabilité voir d'utilisation limitée. D'autres dispositifs réutilisables ne présentent pas autant de garanties sanitaires que la présente invention.

L'ensemble selon l'invention permet de remédier à ces inconvénients et propose un dispositif ou ensemble destiné à recevoir des aliments conforme à la revendication 1. Il comporte en effet plusieurs caractéristiques nouvelles et déterminantes :
Les deux parties, coiffe et socle, sont réalisées à partir d'au moins une partie d'empreinte de forme compartimentée par moulage, usinage, emboutissage ou autre. La matrice est utilisée aussi bien pour l'usinage de la coiffe que du socle, aux cotes imposées, quels que soient les matériaux employés.
La coiffe, élément essentiel de l'invention, est réalisée à partir de toute matière permettant d'obtenir le film résistant sur lequel seront disposés directement les aliments cuisinés. Elle est amovible et vient s'appliquer sur le socle dont elle épouse par conception les formes. Elle vient s'insérer entre les aliments et le socle, se substituant ainsi à la vaisselle traditionnelle. Formée à partir de la même empreinte de forme compartimentée que le socle, elle en acquiert la rigidité, demeure stable sur son support et ne peut se déformer à l'usage.

Cette coiffe à usage unique sera jetée une fois les aliments consommés, apportant ainsi une meilleure sécurité d'hygiène. Elle est réalisée dans une matière garantie alimentaire, conforme aux normes européennes. Elle peut recouvrir le socle partiellement.

Alors que le socle est réutilisable à volonté, une nouvelle coiffe sera impérativement mise en place à chaque utilisation.

Selon tout mode particulier de réalisation :
- la coiffe et le socle sont liés en raison de leur utilisation conjuguée. Les matériaux utilisés ne seront pas forcément identiques. On peut faire appel à diverses matières telles que matériaux thermodurcissables, thermoplastiques, métallisés ou non, polystyrène, métal, carton compact ou ondulé, combiné des deux, ou toute matière appropriée de préférence recyclable ou biodégradable.
- pour la fabrication, tous les précédés en usage, tels qu'injection, thermoformage, moulage à partir d'une même partie d'empreinte de moule de forme compartimentée ou usinage, emboutissage ou pressage avec une même forme de partie d'empreinte compartimentée, pourront être utilisés.
- la forme et les dimensions de la coiffe et de son socle ainsi que le nombre et le volume des compartiments sont variables et peuvent être modifiés à la demande selon des besoins particuliers ou en fonction de certains critères. L'ensemble peut être carré, rectangulaire, ovale, rond, en forme d'assiette spécifique, ou de toute autre forme.
- l'épaisseur de la coiffe doit être la plus mince possible compte tenu des contraintes imposées, quelle qu'en soit la matière, pour optimiser le rendement et éviter le gaspillage.
- blanche, teintée ou translucide, cette coiffe peut être personnalisée et ornée de décorations diverses, logos, enseignes ou tout autre symbole.

Les dessins annexés illustrent l'invention. A titre d'exemple non limitatif, les figures suivantes illustrent l'un des modèles possibles :

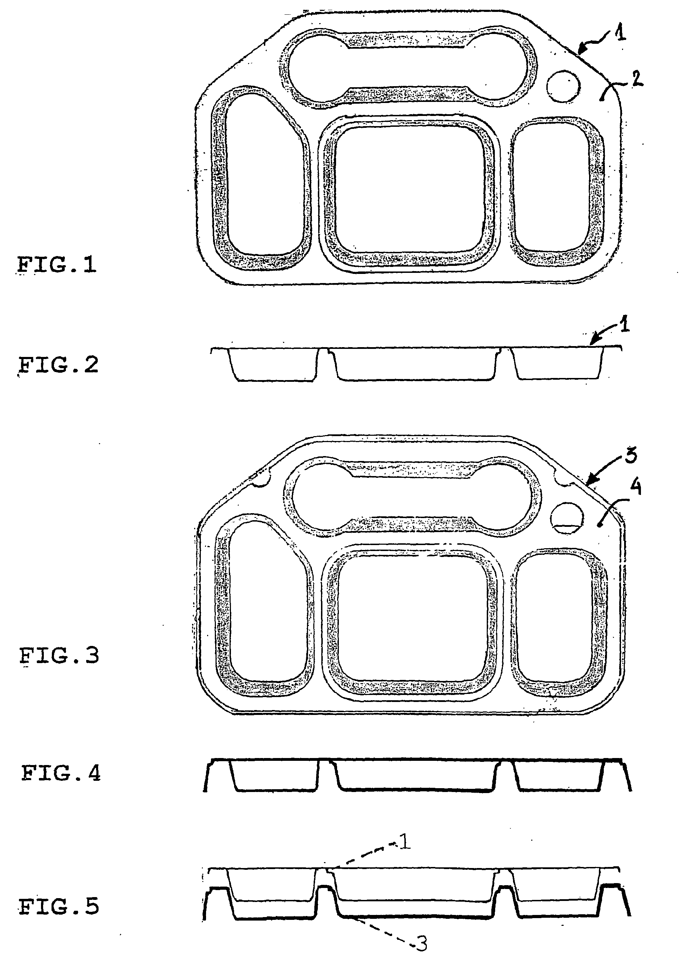

La figure 1 représente la forme de la coiffe.
La figure 2 représente une coupe du la coiffe.
La figure 3 représente la forme du socle.
La figure 4 représente une coupe du socle.
La figure 5 représente en coupe coiffe et socle de l'ensemble juste avant la mise en place d'emboîtement définitive.

Ces différentes figures montrent clairement les deux parties de l'invention :
- la première partie, la coiffe 1 qui reçoit les aliments, est réalisée en matériau de très faible épaisseur 2.
- la seconde partie, le socle 3 sur lequel vient s'adapter la coiffe 1, est constitué d'une matière dont l'épaisseur 4 en assure la rigidité.
- le positionnement 5 des deux parties 1 et 3 en emboîtement l'une sur l'autre nous montre en coupe, la façon de présenter la coiffe 1 sur le socle 3, préalablement à son application sur celui-ci, pour une utilisation normale.

Le dispositif selon l'invention, est destiné particulièrement aux domaines alimentaires, plus spécialement au service de la restauration.

Dans ce cas, l'exemple ci-dessus est celui d'un type de plateau-repas 5 constitué d'une partie socle 3 pourvue d'une partie coiffe 1 conforme à l'invention. Son utilisation très simple offre d'incontestables avantages dans divers domaines :
- d'une part, le consommateur prend son plateau 5, choisit son repas (les aliments sont disposés sur la coiffe 1 et éventuellement les accessoires), paye, l'emporte et s'installe, le consommes, puis s'en va.
- d'autre part, le professionnel qui adopte ce concept en apprécie aussitôt l'intérêt.
- dès que le client se retire, le débarras des éléments se trouve simplifié à l'extrême. Le préposé chargé de cette tâche saisit le plateau 5 d'une main, tandis que de l'autre main il retire du socle 3 la coiffe 1 contenant les restes du repas et s'en débarrasse dans une poubelle.

Les autres avantages qui assurent encore une meilleure efficacité sont les suivants :
- élimination de la manutention de la vaisselle et d'autres accessoires.
- réduction quasi-totale de la vaisselle.
- économie d'eau et de produit de lavage, entraînant une participation à la protection de l'environnement.
- gain de temps de préparation en cuisine.
- simplification du service.
- encombrement : les deux parties, socle et coiffe de l'ensemble, qui s'emboîtent, limitent l'encombrement tout en facilitant la manutention et le stockage.
- annulation des attentes entre la commande, le service, et la note de paiement.

Par conséquent, tous ces avantages favorisent l'augmentation de rotation de la clientèle.

Dans le domaine alimentaire, cette invention s'adapte parfaitement à la distribution de plats cuisinés à consommer immédiatement et convient très bien à la restauration en général. Elle peut satisfaire entre autre, les entreprises spécialisées dans l'organisation de meetings, les grandes surfaces, les réseaux aériens, maritimes, ferroviaires, l'éducation nationale, les centres hospitaliers, les maisons de retraite, mais aussi toutes les entreprises de restauration rapide nationales, internationales ou franchisées.

Enfin, le prix de revient modique de cette coiffe, défiant toute concurrence, renforce l'intérêt de l'invention.

On notera que le dispositif peut comporter un couvercle venant recouvrir au moins la coiffe 1 ou une partie de celle-ci (non représenté), de même matière ou non que la coiffe 1, de garantie alimentaire, ce couvercle étant de préférence conformé pour s'emboîter sans encombrement sous le socle 3 au moment du repas et supporter éventuellement un ou plusieurs autres dispositifs avec des aliments pour faciliter la manutention par une seule personne. Ce couvercle peut également être compartimenté pour sa rigidité, dans la même empreinte que le socle et la coiffe, éventuellement être de forme identique à la coiffe au jeu d'emboîtement près sous le socle permettant d'une part son emboîtement sous le socle 3 au moment du repas, et d'autre part d'isoler thermiquement les aliments chauds des aliments froids sur la coiffe 1.

## Revendications

1. Dispositif ou ensemble (5) destiné à recevoir des aliments, comportant deux parties semblables, emboîtables, d'épaisseurs différentes, et solidaires pendant leur usage, une première partie dénommée coiffe (1) recevant des aliments et une seconde partie qui constitue le socle (3) la coiffe (1) étant reçue en emboîtement de façon amovible sur le socle (3), **caractérisé en ce que** lesdites deux parties semblables comportent au moins une même partie d'empreinte de forme compartimentée.

2. Dispositif ou ensemble (5) selon la revendication 1, **caractérisé en ce que** la coiffe (1) recevant les aliments a l'épaisseur d'un film (2) résistant.

3. Dispositif ou ensemble (5) selon la revendication 1 ou la revendication 2, **caractérisé en ce que** le socle (3) sur lequel vient s'adapter la coiffe (1) a une épaisseur (4) qui assure la résistance et la rigidité de l'ensemble (5).

4. Dispositif ou ensemble (5) selon l'une quelconque des revendications précédentes, **caractérisé en ce que** la forme et les dimensions de la coiffe (1) et de son socle (3) ainsi que le nombre et le volume des compartiments sont variables.

5. Dispositif ou ensemble (5) selon l'une des revendications 1 à 4 **caractérisé en ce que** ledit ensemble (5) des deux parties, coiffe (1) et socle (3), est de forme variable.

6. Dispositif ou ensemble (5) selon l'une quelconque des revendications précédentes, **caractérisé en ce que** ledit ensemble (5) des deux parties, coiffe (1) et socle (3), est de type plateau-repas.

7. Dispositif ou ensemble (5) selon l'une des revendications précédentes, **caractérisé en ce que** la coiffe (1) recouvre le socle (3) partiellement.

8. Dispositif ou ensemble (5) selon l'une des revendications 1 à 7, **caractérisé en ce qu'**il comporte un couvercle compartimenté ou non, de même empreinte que le socle (3) et la coiffe (1).

9. Procédé pour fabriquer un dispositif ou ensemble (5) selon l'une des revendications précédentes, **caractérisé en ce que** les deux parties, coiffe (1) et socle (3), sont issues de moulage en matière synthétique ou autre, réalisées à partir de la même empreinte de moule, de forme compartimentée.

10. Procédé pour fabriquer un dispositif ou ensemble (5) selon l'une des revendications 1 à 8, **caractérisé en ce que** lesdites parties, coiffe (1) et socle (3), sont issues d'usinage ou d'emboutissage, avec une même forme de partie d'empreinte compartimentée.

11. Procédé selon la revendication 10, **caractérisé en ce que** la coiffe (1) est conçue de façon variable et à la demande, en fonction du socle ou support (3) disponible sur le marché.

12. Utilisation d'un dispositif ou ensemble (5) selon l'une des revendications 1 à 8 pour recevoir des aliments, **caractérisé en ce que** la coiffe (1) est appliquée sur le socle (3) dont elle épouse par conception la forme et les aliments et éventuellement les accessoires sont posés sur la coiffe (1), cette coiffe (1) étant destinée à être jetée une fois les aliments consommés, une nouvelle coiffe (1) étant mise en place sur le socle (3) à chaque utilisation, le socle (3) étant destiné à être réutilisé.

## Claims

1. A device or assembly (5) designed for receiving foodstuffs, comprising two similar, nestable portions, of different thicknesses, and fixedly attached during their use, a first portion called the cover (1) receiving foodstuffs and a second portion that forms the base (3), the cover (1) being received removable by the base (3) nesting therein, **characterized in that** the similar portions comprise at least a same cavity portion of compartmentalized shape.

2. The device or assembly (5) as claimed in claim 1, **characterized in that** the cover (1) receiving the foodstuffs has the thickness of a strong film (2).

3. The device or assembly (5) as claimed in claim 1 or claim 2, **characterized in that** the base (3) onto which the cover (1) fits has a thickness (4) that provides the strength and the rigidity of the assembly

4. The device or assembly (5) as claimed in any one of the preceding claims, **characterized in that** the shape and dimensions of the cover (1) and of its base (3) and the number and volume of the compartments are variable.

5. The device or assembly (5) as claimed in one of claims 1 to 4, **characterized in that** said assembly (5) of the two portions, cover (1) and base (3), is of variable shape.

6. The device or assembly (5) as claimed in any one of the preceding claims, **characterized in that** said assembly (5) of the two portions, cover (1) and base (3), is of the meal-tray type.

7. The device or assembly (5) as claimed in one of the preceding claims, **characterized in that** the cover (1) covers the base (3) partially.

8. The device or assembly (5) as claimed in one of claims 1 to 7, **characterized in that** it comprises a lid that may or may not be compartmentalized, of the same cavity as the base (3) and the cover (1).

9. A method for manufacturing a device or assembly (5) as claimed in one of the preceding claims, **characterized in that** the two portions, covet (1) and base (3), are molded of synthetic or other material made for the same mold cavity, of compartmentalized shape.

10. The method for manufacturing a device or assembly (5) as claimed in one of claims 1 to 8, **characterized in that** said portions, cover (1) and base (3), are made by machining or stamping, with the same shape of compartmentalized cavity portion.

11. The method as claimed in claim 10, **characterized in that** the cover (1) is designed in a variable manner and on demand, according to the base or support (3) available on the market.

12. The use of a device or assembly (5) as claimed in any one of claims 1 to 8 to receive foodstuffs, **characterized in that** the cover (1) is pressed onto the base (3) whose shape, by design, it closely hugs, and the foodstuffs and, as appropriate, the accessories are placed on the cover (1), this cover (1) being designed to be discarded once the foodstuffs have been consumed, a new cover (1) being put in place on the base (3) with each use, the base (3) being designed to be reused.

## Patentansprüche

1. Vorrichtung oder Gesamtheit (5), die zum Aufnehmen von Lebensmitteln bestimmt ist und zwei ähnliche zusammensetzbare Abschnitte unterschiedlicher Dicke enthält, die während ihres Gebrauchs verbunden sind, einen ersten Abschnitt, der Abdeckung (1) genannt wird und die Lebensmittel aufnimmt, und einen zweiten Abschnitt, der den Sockel (3) bildet, wobei die Abdeckung (1) durch Ineinandergreifen auf bewegliche Weise auf dem Sockel (3) aufgenommen wird,
**dadurch gekennzeichnet, dass**
die zwei ähnlichen Abschnitte zumindest einen gleichen Vertiefungsabschnitt in unterteilter Form enthalten.

2. Vorrichtung oder Gesamtheit (5) gemäß Anspruch 1, **dadurch gekennzeichnet, dass** die Abdeckung (1), die die Lebensmittel aufnimmt, die Dicke eines widerstandsfähigen Films (2) hat.

3. Vorrichtung oder Gesamtheit (5) gesäß Anspruch 1 oder Anspruch 2, **dadurch gekennzeichnet, dass** der Sockel (3), auf den die Abdeckung (1) zu passen kommt, eins Dicke (4) hat, die die Widerstandsfähigkeit und Steifheit der Gesamtheit (5) sicherstellt.

4. Vorrichtung oder Gesamtheit (5) gemäß einem der vorigen Ansprüche, **dadurch gekennzeichnet, dass** die Form und die Abmessungen der Abdeckung (1) und ihres Sockels (3) so sind, dass die Anzahl und das Volumen der Unterteilungen variabel ist.

5. Vorrichtung oder Gesamtheit (5) gemäß einem der Ansprüche 1 bis 4, **dadurch gekennzeichnet, dass** die Gesamtheit (5) der zwei Teile, Abdeckung (1) und Sockel (3), eine variable Form hat.

6. Vorrichtung oder Gesamtheit (5) gemäß einem der vorigen Ansprüche, **dadurch gekennzeichnet, dass** die Gesamtheit (5) der zwei Teile, Abdeckung (1) und Sockel (3), vom Typ eines Speisetabletts ist.

7. Vorrichtung oder Gesamtheit (5) gesäß einem der vorigen Ansprüche, **dadurch gekennzeichnet, dass** die Abdeckung (1) den Sockel (3) teilweise bedeckt.

8. Vorrichtung oder Gesamtheit (5) gemäß einem der Ansprüche 1 bis 7, **dadurch gekennzeichnet, dass** sie einen unterteilten oder nicht unterteilten Deckel mit der gleichen Vertiefung wie der Sockel (3) und die Abdeckung (1) enthält.

9. Verfahren zum Herstellen einer Vorrichtung oder Gesamtheit (5) gemäß einem der vorigen Ansprüche, **dadurch gekennzeichnet, dass** die zwei Teile, Abdeckung (1) und Sockel (3), aus einer Formung eines Kunststoffs oder eines anderen Materials hervorgehen und ausgehend von derselben Vertiefungsform in unterteilter Form verwirklicht werden.

10. Verfahren zum Herstellen einer Vorrichtung oder Gesamtheit (5) gemäß einem der Absprüche 1 bis 8, **dadurch gekennzeichnet, dass** die zwei Teile, Abdeckung (1) und Sockel (3), aus maschineller Fertigung oder Tiefziehen mit derselben unterteilten Ausgangsvertiefungsform hervorgehen.

11. Verfahren gemäß Anspruch 10, **dadurch gekennzeichnet, dass** die. Abdeckung (1) auf variable Weise und nach Bedarf entworfen ist abhängig von dem Sockel oder Träger (3), der auf dem Markt verfügbar ist.

12. Verwendung einer vorrichtung ober Gesamtheit (5) gemäß einem der Ansprüche 1 bis 8 zum Aufnehmen von Lebensmitteln, **dadurch gekennzeichnet, dass** die Abdeckung (1) auf dem Sockel (3) angebracht wird, dem sie sich durch Annahme der Form anschmiegt, und die Lebensmittel und eventuelles Zubehör auf die Abdeckung (1) gelegt werden, wobei die Abdeckung (1) dazu bestimmt ist, weggeworfen zu werden, nachdem einmal die Lebensmittel konsumiert sind, wobei bei jeder Verwendung eine neue Abdeckung (1) auf ihren Platz auf dem Sockel (3) gelegt wird, wobei der Sockel (3) dazu bestimmt ist, wiederverwendet zu werden.
